# EUROPÄISCHE PATENTSCHRIFT

(11) **EP 1 518 782 B1**
(45) Veröffentlichungstag und Bekanntmachung des Hinweises auf die Patenterteilung: **26.05.2010**
(21) Anmeldenummer: 04020354.9
(22) Anmeldetag: 27.08.2004
(51) Int. Cl.: B62D 25/08, B62D 29/00

(54) **Einbaumodul für einen Durchlass in einer Stirnwand einer Fahrgastzelle**
Assembly module for a passage in a front wall of a passenger compartment of a vehicle
Module de montage pour un passage dans une paroi frontale du compartiment passagers d'un véhicule

(30) Priorität: 26.09.2003 DE 10344704
(43) Veröffentlichungstag der Anmeldung: 30.03.2005
(73) Patentinhaber: Bayerische Motoren Werke Aktiengesellschaft, 80809 München (DE); VERITAS AG, 63571 Gelnhausen (DE)
(72) Erfinder: Dieterich, Lothar, 82110 Germering (DE); Mederer, Christian, 80636 München (DE); Drössler, Christoph, 84085 Langquaid (DE); Netzer, Heribert, 63457 Hanau (DE)

(56) Entgegenhaltungen:
- EP-A- 0 281 457
- EP-A- 0 992 420
- DE-A1- 19 524 175
- GB-A- 2 329 363

## Beschreibung

Die Erfindung betrifft ein Einbaumodul für einen Durchlass in einer Stirnwand einer Fahrgastzelle eines Kraftfahrzeuges gemäß des Oberbegriffs des Patentanspruchs 1, sowie eine Stirnwand einer Fahrgastzelle für links- und rechtsgesteuerte Fahrzeuge mit zumindest zwei Durchlässen, die jeweils mit einem solchen Einbaumodul verschlossen sind.

Aus der DE 195 24 165 A1 ist eine Stirnwand einer Fahrgastzelle eines Kraftfahrzeuges bekannt, die Durchlässe für eine funktionale Verbindung von Bauteilen in der Fahrgastzelle mit Bauteilen im Motorraum aufweist, in die Einbaumodule mit darin zusammengefassten Funktionselementen einsetzbar sind. Dabei ist zumindest zu einem Durchlass rechts der Stirnwand ein formgleicher Durchlass links der Stirnwandmitte vorhanden. Ein Einbaumodul ist wahlweise links oder rechts der Stirnwandmitte in einen Durchlass einsetzbar. Dadurch kann die Stirnwand in Linkslenkerfahrzeugen ebenso wie in Rechtslenkerfahrzeugen eingebaut werden. Die paarweise Zuordnung der Durchlässe lässt den Einbau eines Einbaumoduls mit darin zusammengefassten Funktionselementen auf der rechten wie auf der linken Stirnwandseite zu. Die zu ihrem Durchlass passenden Außenabmessungen der Einbaumodule bewirken, dass der Durchlass vollständig ausgefüllt wird, und so wiederum eine Schallisolierung von Motorraum zur Fahrgastzelle erreicht wird. Ebenso können nicht benötigte Durchlässe durch eine Abdeckung überdeckt werden.

Ferner ist aus der DE 30 01 274 C2 eine Pedalanordnung für ein Fahrzeug bekannt, die eine zum Einbau in einen Durchlass in einer die Fahrgastzelle begrenzenden Stirnwand eine Montageplatte enthält, an der zumindest ein Pedal verschwenkbar gelagert ist. Die Montageplatte ist wahlweise auch in einen zu dem Durchlass in der Stirnwand symmetrisch auf der anderen Seite der Längsmittelachse des Fahrzeugs angeordneten zweiten Durchlass von gleichen Abmessungen einbaubar. Dadurch lässt sich die mit einer Pedalanordnung versehene Montageplatte jeweils in eine von zwei Durchlässen einer im vorderen Teil der Fahrgastzelle angeordneten Stirnwand einbauen, so dass sich ein und derselbe Fahrzeugaufbau sowohl bei Fahrzeugen mit Linkslenkung als auch bei solchen mit Rechtslenkung verwenden lässt.

Ein gattungsgemäßes Einbaumodul für einen Durchlass in einer Stirnwand einer Fahrgastzelle eines Ktz is aus der EP 0 281 457 A1 bekannt.

Aufgabe der Erfindung ist es, das bekannte Einbaumodul für einen Durchlass in einer Stirnwand, die insbesondere sowohl für rechts- als auch für linksgelenkte Fahrzeuge verwendet werden kann, zu verbessern.

Diese Aufgabe wird durch ein Einbaumodul für einen Durchlass in einer Stirnwand einer Fahrgastzelle mit den Merkmalen des Patentanspruchs 1 gelöst. Patentanspruch 17 bezieht sich auf eine Stirnwand einer Fahrgastzelle für linksund rechtsgesteuerte Fahrzeuge, mit zumindest zwei Durchlässen, die jeweils mit einem solchen Einbaumodul verschlossen sind.

Gemäß Patentanspruch 1 besteht ein Einbaumodul für einen Durchlass in einer Stirnwand einer Fahrgastzelle eines Kraftfahrzeugs aus einem verstärkten Kunststoff. Die Stirnwand ist bevorzugt sowohl für links- als auch für rechtsgelenkte Fahrzeuge verwendbar. Dies setzt voraus, dass die Stirnwand so aufgebaut ist, dass die zu verschließenden Durchlässe jeweils paarweise vorhanden und gleich groß sind. In zwei solche zueinander angeordnete Durchlässe können unterschiedliche Einbaumodule eingebaut werden, sodass die Unterscheidung zwischen Links- und Rechtslenker über die Einbaumodule erfolgt, der eigentliche Rohbau mit der Stirnwand aber immer der gleiche ist. Das Einbaumodul besteht aus einem verstärkten Kunststoff, wie beispielsweise aus einem mit Glasfasern oder Glaskugeln verstärkten Thermoplast, wie Polypropylen oder Polyamid. Ein derartiger verstärkter Kunststoff weist eine sehr hohe Festigkeit auf, sodass das Einbaumodul nicht mehr aus einem metallischen Werkstoff bestehen muss, um eine ausreichende Steifigkeit und Festigkeit aufzuweisen. Der Verschluss eines Durchlasses mit einem steifen Einbaumodul ist für die Gesamtsteifigkeit der Stirnwand und damit der Fahrzeugkarosserie von großer Bedeutung. Die Verwendung eines Einbaumoduls aus einem Kunststoff ermöglicht eine viel freiere Gestaltung desselbigen. Zudem können zusätzliche funktionale Elemente direkt an das Einbaumodul mitangespritzt und somit einteilig integriert werden.

Bevorzugt verschließt das Einbaumodul als Deckel den Durchlass vollständig. Somit sind die Fahrgastzelle und der Motorraum ganz voneinander getrennt. Im Motorraum können sich Schmutz und Spritzwasser befinden, die aufgrund des Einbaumoduls, dass den Durchlass vollständig verschließt, nicht durch diesen in die Fahrgastzelle eindringen können. Günstigerweise ist deswegen auch an dem Einbaumodul umlaufend eine Dichtung angebracht, sodass das Einbaumodul dichtend den Durchlass verschließt.

Vorteilhafterweise ist auf dem Einbaumodul zumindest auf einer Seite eine Schicht zur Schalldämmung angebracht. Normalerweise ist auf der Stirnwand vollflächig eine Dämmschicht zur Schallisolierung angebracht. Im Bereich der Durchlässe ist auch diese Dämmschicht ausgespart. Durch die schalldämmende Schicht auf zumindest einer Seite des Einbaumoduls weist die Stirnwand trotzdem keine Schwachstelle auf, an der der Schall aus dem Motorraum unzureichend gedämpft in die Fahrgastzelle eindringen kann. Die Dämmschicht besteht vorteilhafterweise aus einem weichen Kunststoff, wie beispielsweise TPE, der auf den Träger aufgespritzt sein kann. Dieser weiche Kunststoff kann zugleich als Dichtung zur Stirnwand dienen, sodass das Einbaumodul dichtend an der Stirnwand anliegt.

Kunststoffbauteile haben gegenüber Blechbauteilen den großen Vorteil, dass sie wesentlich freier gestaltet werden können und gut weitere Funktionen in ein solches Bauteil integrierbar sind. So kann das Einbaumodul beispielsweise zumindest eine Aufnahme für eine Wischanlage, eine Aufnahme zur Befestigung einer Pedalanordnung, eine Aufnahme zur Befestigung zumindest eines Kabels und / oder eine Aufnahme für eine Klimaanlage und / oder eine Heizung aufweisen. Auch kann das Einbaumodul zumindest einen Durchtritt von der Fahrgastzelle zum Motorraum für ein Kabel und / oder für Frischluft aus dem Motorraum aufweisen, durch den die Klimaanlage und / oder Heizung mit Frischluft versorgt wird.

Gemäß Patentanspruch 17 weist eine Stirnwand einer Fahrgastzelle für links- und rechtsgesteuerte Fahrzeuge zumindest zwei gleich große Durchlässe auf, die jeweils mit einem oben beschriebenen Einbaumodul verschlossen sind. Die beiden Durchlässe müssen nicht symmetrisch zur Fahrzeugmittelachse angeordnet sein. Durch den Einsatz der Einbaumodule kann eine einheitliche Stirnwand für rechtsund linksgesteuerte Fahrzeuge verwendet werden.

Weitere vorteilhafte Ausgestaltungen sind Gegenstand von Unteransprüchen.

In der Zeichnung ist ein Ausführungsbeispiel der Erfindung dargestellt, anhand dessen die Erfindung im folgenden näher beschrieben wird. Die einzelnen Figuren zeigen in schematischer Darstellungsweise:
- Fig. 1: eine perspektivische Ansicht einer Stirnwand mit zwei Durchlässen, in denen jeweils ein Einbaumodul angebracht ist,
- Fig. 2: eine perspektivische Ansicht der in Fig. 1 gezeigten Stirnwand von der anderen Seite und
- Fig. 3: eine perspektivische Ansicht eines der beiden in Fig. 1 und Fig. 2 gezeigten Einbaumodule.

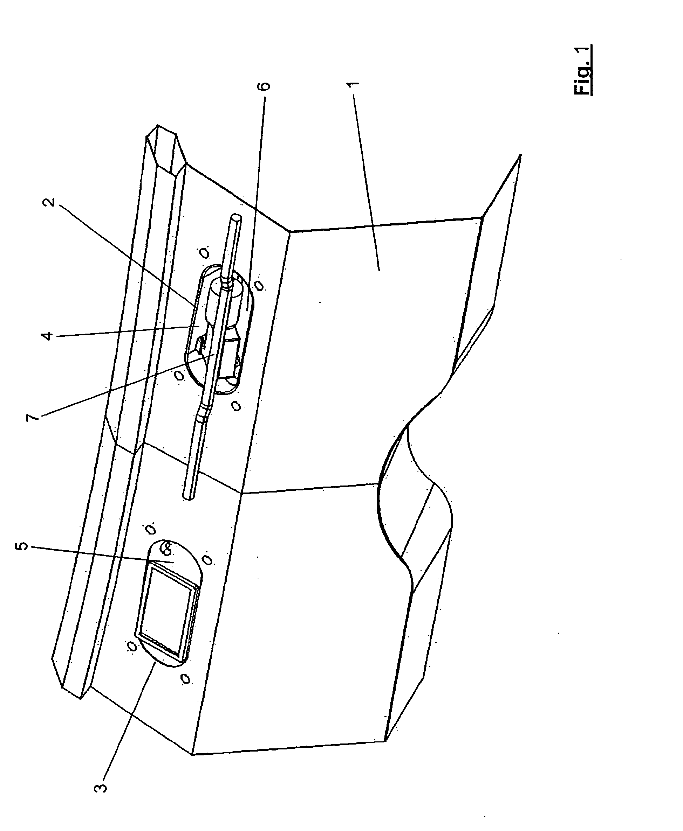

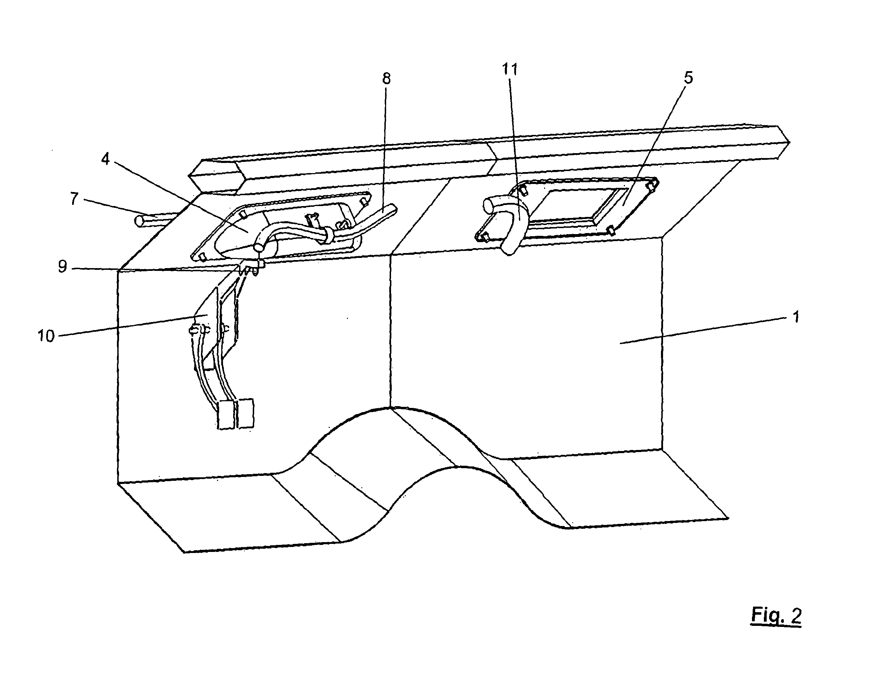

Fig. 1 zeigt eine Stirnwand 1 vom Motorraum aus, während Fig. 2 dieselbe Stirnwand 1 von der Fahrgastzelle aus darstellt. Die Stirnwand 1 ist so gebaut, dass sie sowohl für links als auch für rechts gesteuerte Fahrzeuge geeignet ist. Sie weist links und rechts je einen gleich großen Durchlass 2 und 3 auf, in denen jeweils ein Einbaumodul 4 und 5 verbaut ist. Das fahrerseitige Einbaumodul 4 im - in Fahrtrichtung gesehen - linken Durchlass 2 weist eine große schalenartige Vertiefung 6 in die Fahrgastzelle hinein auf. In der Vertiefung 6 ist vom Motorraum her eine Scheibenwischanlage 7 angebracht. Zusätzlich dient es auf der Seite zur Fahrgastzelle hin zur Befestigung eines Kabels 8 und weist einen Befestigungspunkt 9 zur Anbringung einer Pedalanordnung 10 auf. Das beifahrerseitige Einbaumodul 5 im rechten Durchlass 3 dient zur Aufnahme einer Heizung, die sowohl in den Motorraum als auch in die Fahrgastzelle ragt. Zudem weist es auf der Seite zur Fahrgastzelle hin eine Aufnahme für einen Luftschlauch 11 auf.

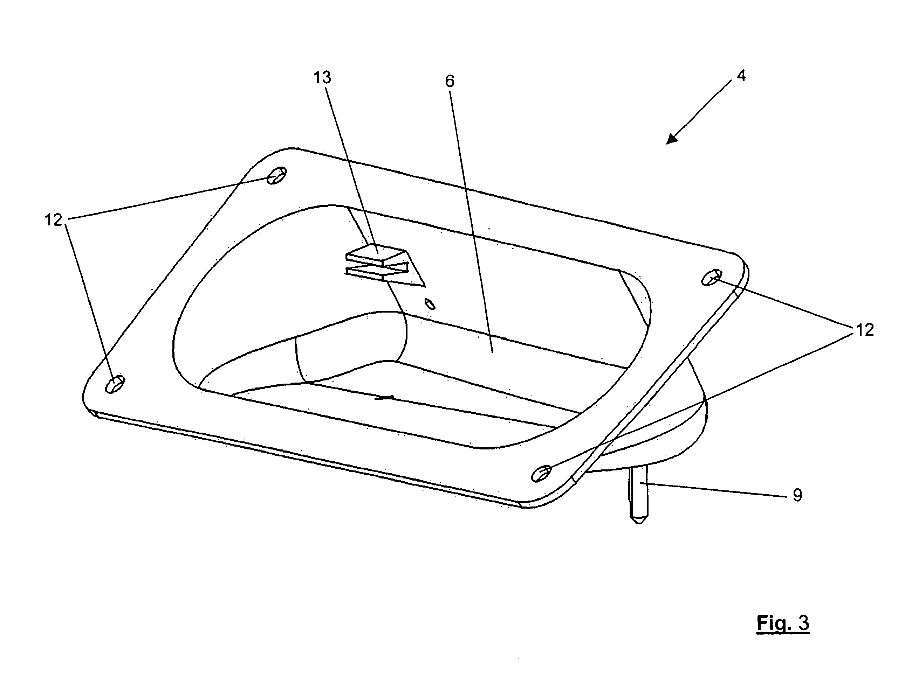

In Fig. 3 ist das linke Einbaumodul 4 noch einmal separat dargestellt. Es verschließt den linken Durchlass 2 vollständig. Das Einbaumodul 4 besteht aus Polyamid mit Glasfaserverstärkung PA 6.6 GF 50. Auf das Einbaumodul 4 ist auf der dem Motorraum zugewandten Seite eine Schicht aus einem weichen Kunststoff wie TPE aufgespritzt. Der weiche Kunststoff dient zur Schalldämmung. Der weiche Kunststoff bildet umlaufend zugleich eine Dichtlippe, mit der das Einbaumodul 4 dichtend an der Stirnwand 1 anliegt. Dadurch kann kein Schmutz oder Spritzwasser aus dem Motorraum durch den Durchlass 2 in die Fahrgastzelle gelangen. Zur Befestigung an der Stirnwand weist das Einbaumodul 4 vier Anschraublöcher 12 auf. Damit diese Anschraublöcher 12 nicht ausbrechen können, sind metallische Buchsen in den Anschraublöchern 12 vorgesehen, die als Inserts in den Träger mit eingespritzt worden sind.

In der Vertiefung 6 des Einbaumoduls 2 befindet sich zudem eine Aufnahme 13, die einteilig mit dem Einbaumodul 4 ausgeführt ist. Diese Aufnahme 13 dient zur Befestigung der Scheibenwischanlage 7 in der Vertiefung 6. Auf der der Fahrgastzelle zugewandten Seite des Einbaumoduls 4 ist zudem ein Gewindestift 9 als Befestigungspunkt für die Pedalanordnung 10 in das Einbaumodul 4 miteingespritzt, der in die Fahrgastzelle hinein ragt. An dem Gewindestift 9 kann die Pedalanordnung 10 angeschraubt werden.

Aus Kostengründen wird in der Automobilindustrie allgemein ein Rohbau angestrebt, bei dem nicht zwischen links- und rechtsgesteuerten Fahrzeugen unterschieden werden muss. Dies setzt eine Stirnwand voraus, die sowohl bei linksals auch bei rechtsgesteuerten Fahrzeugen verwendet werden kann. Bisher wurden dazu jeweils zwei Durchbrüche für die Heizung vorgesehen, wobei die Heizung in Abhängigkeit des Lenkertyps entweder in dem einen oder in dem anderen Durchbruch angeordnet wurde. Für die Scheibenwischanlage wurden ebenfalls zwei Vertiefungen in der Stirnwand vorgesehen, wobei auch jeweils nur eine davon genutzt wurde. Entsprechendes galt für alle notwendigen Befestigungshalter für eine Pedalanordnung, einen Kabelbaum, etc. Damit einher ging ein erheblicher Bauraumverlust und die Kosten für eine solche Stirnwand waren hoch.

Die Stirnwand 1 ist ohne die oben genannten Nachteile sowohl bei links- als auch bei rechtsgesteuerten Fahrzeugen einsetzbar. Die Stirnwand 1 weist dazu nur zumindest zwei gleich große Durchlässe 2 und 3 auf. In eine der beiden Durchlässe 2 oder 3 wird in Abhängigkeit davon, ob das Fahrzeug links oder rechts gesteuert ist, das Einbaumodul 4 zur Aufnahme der Scheibenwischanlage 7 und zur Befestigung der Pedalanordnung 10 befestigt. Das Einbaumodul 4 verschließt dabei dichtend den Durchlass 2 und hat zusätzlich eine versteifende Funktion für die Stirnwand 1. In den verbleibenden Durchlass 3 wird ein anderes Einbaumodul 5 verbaut, das zur Aufnahme einer Heizung dient. Bei einem von der anderen Seite gesteuerten Fahrzeug werden nur die beiden Einbaumodule 4 und 5 anders herum in die beiden Durchlässe 2 und 3 montiert. Auf diese Weise müssen keine Befestigungshalter mehr doppelt vorgesehen werden und es geht kein Bauraum unnötig verloren.

## Patentansprüche

1. Einbaumodul für einen Durchlass in einer Stirnwand einer Fahrgastzelle eines Kraftfahrzeugs, wobei insbesondere die Stirnwand sowohl für links- als auch für rechtsgelenkte Fahrzeuge verwendbar ist, wobei das Einbaumodul (4, 5) aus einem verstärkten Kunststoff besteht,
wobei auf dem Einbaumodul (4, 5) zumindest auf einer Seite eine Schicht zur Schalldämmung angebracht ist, **dadurch gekennzeichnet, dass** an dem Einbaumodul (4) umlaufend eine Dichtung angebracht ist, sodass das Einbaumodul (4) dichtend den Durchlass (2) verschließt, und dass die Schalldämmung aus einem weichen Kunststoff besteht, und zugleich die Dichtung bildet.

2. Einbaumodul nach Anspruch 1, **dadurch gekennzeichnet, dass** der weiche Kunststoff auf das Einbaumodul (4, 5) aufgespritzt ist.

3. Einbaumodul nach einem der vorhergehenden Ansprüche, **dadurch gekennzeichnet, dass** das Einbaumodul (4, 5) metallische Inserts zur Befestigung an der Stirnwand (1) aufweist.

4. Einbaumodul nach Anspruch 3, **dadurch gekennzeichnet, dass** die metallischen Inserts beim Herstellen des Einbaumoduls (4, 5) umspritzt werden.

5. Einbaumodul nach einem der vorhergehenden Ansprüche, **dadurch gekennzeichnet, dass** das Einbaumodul (4) zumindest eine Aufnahme (8) für eine Scheibenwischanlage (7) aufweist.

6. Einbaumodul nach einem der vorhergehenden Ansprüche, **dadurch gekennzeichnet, dass** das Einbaumodul (5) zumindest eine Aufnahme für eine Klimaanlage und / oder Heizung aufweist.

7. Einbaumodul nach Anspruch 6, **dadurch gekennzeichnet, dass** das Einbaumodul (5) zumindest einen Durchtritt für Frischluft aus dem Motorraum aufweist, durch den die Klimaanlage und / oder Heizung mit Frischluft versorgt wird.

8. Einbaumodul nach einem der vorhergehenden Ansprüche, **dadurch gekennzeichnet, dass** das Einbaumodul (4) zumindest eine Aufnahme (9) zur Befestigung einer Pedalanordnung (10) aufweist.

9. Einbaumodul nach einem der vorhergehenden Ansprüche, **dadurch gekennzeichnet, dass** das Einbaumodul (4) zumindest eine Aufnahme zur Befestigung zumindest eines Kabels (8) aufweist.

10. Einbaumodul nach Anspruch 9, **dadurch gekennzeichnet, dass** das Einbaumodul zumindest eine Kabeldurchführung von der Fahrgastzelle zum Motorraum aufweist.

11. Einbaumodul nach einem der Ansprüche 5 bis 10, **dadurch gekennzeichnet, dass** zumindest eine Halterung (8) einteilig mit dem Einbaumodul (4) ausgeführt ist.

12. Stirnwand (1) einer Fahrgastzelle für links- und rechtsgesteuerte Fahrzeuge, mit zumindest zwei gleich großen Durchlässen (2, 3), die jeweils mit einem Einbaumodul (4, 5) nach einem der vorhergehenden Ansprüche verschlossen sind.

## Claims

1. An installation module for a passage in a front wall of a passenger compartment of a motor vehicle, wherein the front wall, especially, can be used both for left-hand drive and right-hand drive vehicles, the installation module (4, 5), consisting of a reinforced plastics material, a layer for sound insulation being applied to the installation module (4, 5), at least on one side, **characterised in that** a seal is provided peripherally on the installation module (4), so that the installation module (4) closes the passage (2) in a sealing manner, and **in that** the sound insulation consists of a soft plastics material and simultaneously forms the seal.

2. An installation module according to claim 1, **characterised in that** the soft plastics material is sprayed onto the installation module (4, 5).

3. An installation module according to any one of the preceding claims, **characterised in that** the installation module (4, 5) has metallic inserts for fastening to the front wall (1).

4. An installation module according to claim 3, **characterised in that** the metallic inserts are sheathed during production of the installation module (4, 5).

5. An installation module according to any one of the preceding claims, **characterised in that** the installation module (4) has at least one receiver (8) for a windscreen wiper system (7).

6. An installation module according to any one of the preceding claims, **characterised in that** the installation module (5) has at least one receiver for an air conditioning system and/or heater.

7. An installation module according to claim 6, **characterised in that** the installation module (5) has at least one passageway for fresh air from the engine compartment, through which the air conditioning system and/or heater is supplied with fresh air.

8. An installation module according to any one of the preceding claims, **characterised in that** the installation module (4) has at least one receiver (9) for fastening a pedal arrangement (10).

9. An installation module according to any one of the preceding claims, **characterised in that** the installation module (4) has at least one receiver for fastening at least one cable (8).

10. An installation module according to claim 9, **characterised in that** the installation module has at least one cable feedthrough from the passenger compartment to the engine compartment.

11. An installation module according to any one of claims 5 to 10, **characterised in that** at least one holder (8) is designed integrally with the installation module (4).

12. A front wall (1) of a passenger compartment for left-hand drive and right-hand drive vehicles, with at least two passages (2, 3) of equal size, which are in each case closed with an installation module (4, 5) according to any one of the preceding claims.

## Revendications

1. Module de montage pour un passage dans une paroi frontale d'un compartiment de passagers d'un véhicule automobile, selon lequel
- notamment, la paroi frontale est utilisable pour des véhicules à conduite à gauche et aussi à conduite à droite,
- le module de montage (4, 5) est en une matière plastique renforcée,
- sur au moins une face le module de montage (4, 5) comporte, une couche d'isolation phonique,
**caractérisé en ce que**
le module de montage (4) comporte un joint périphérique de façon que le module de montage (4) ferme de manière étanche le passage (2), et
l'isolation phonique est en une matière plastique souple qui constitue en même temps le joint.

2. Module de montage selon la revendication 1,
**caractérisé en ce que**
la matière plastique souple est injectée par surmoulage sur le module de montage (4, 5).

3. Module de montage selon l'une des revendications précédentes,
**caractérisé en ce que**
le module de montage (4, 5) comporte des inserts métalliques pour sa fixation à la paroi frontale (1).

4. Module de montage selon la revendication 3,
**caractérisé en ce que**
les inserts métalliques sont surmoulés par injection lors de la fabrication du module de montage (4, 5).

5. Module de montage selon l'une des revendications précédentes,
**caractérisé en ce que**
le module de montage (4) comporte au moins un logement (8) pour une installation d'essuie-glace (7).

6. Module de montage selon l'une des revendications précédentes,
**caractérisé en ce que**
le module de montage (5) comporte au moins un logement pour une installation de climatisation et/ou de chauffage.

7. Module de montage selon la revendication 6,
**caractérisé en ce que**
le module de montage (5) comporte au moins un passage pour l'air frais de l'enceinte du moteur alimentant en air frais de l'installation de climatisation et/ou le chauffage.

8. Module de montage selon l'une des revendications précédentes,
**caractérisé en ce que**
le module de montage (4) comporte au moins un logement (9) pour la fixation d'un dispositif de pédale (10).

9. Module de montage selon l'une des revendications précédentes,
**caractérisé en ce que**
le module de montage (4) comporte au moins un logement pour fixer au moins un câble (8).

10. Module de montage selon la revendication 9,
**caractérisé en ce que**
le module de montage comporte au moins un passage de câble allant du compartiment de passagers vers l'enceinte du moteur.

11. Module de montage selon l'une des revendications 5 à 10,
**caractérisé par**
au moins un moyen de fixation (8) réalisé en une seule pièce avec le module de montage (4).

12. Paroi frontale (1) d'un compartiment de passagers pour des véhicules à conduite à gauche et des véhicules à conduite à droite, avec au moins deux passages (2, 3) de mêmes dimensions fermés respectivement par un module de montage (4, 5) selon l'une des revendications précédentes.
